# DEMANDE DE BREVET EUROPEEN

(11) **EP 1 365 539 A1**
(43) Date de publication de la demande: **26.11.2003**
(21) Numéro de dépôt: 03291015.0
(22) Date de dépôt: 25.04.2003
(51) Int. Cl.: H04L 12/24

(54) **Dispositif et procédé de contrôle de données de service dans un réseau de communications**

(30) Priorité: 23.05.2002 FR 0206286
(71) Demandeur: ALCATEL, 75008 Paris (FR)
(72) Inventeur: Delegue, Gérard, 94230 Cachan (FR); Betge-Brezetz, Stéphane, 75015 Paris (FR); Martinot, Olivier, 91210 Draveil (FR); Marilly, Emmanuel, 92160 Antony (FR)
(74) Mandataire: Chaffraix, Sylvain

(57) **Abrégé**

Un dispositif est destiné au contrôle de données de service, délivrées par des modules de gestion (7) d'un réseau de communications et destinées à permettre le pilotage de modules d'ingénierie de trafic (11,12). Le dispositif comporte i) une mémoire (9) stockant des règles définies, chacune, à partir d'au moins une condition, représentative d'un évènement du réseau associé à l'un des modules d'ingénierie de trafic (11,12), et d'au moins une action, représentative d'au moins une commande devant être exécutée par le module associé, et ii) des moyens de contrôle (3) agencés, à réception de données de service désignant un évènement, pour extraire de la mémoire (9) l'une au moins des règles correspondant à cet évènement et délivrer chaque commande, représentative de l'action qui est associée à la condition représentative de l'événement, à destination du module d'ingénierie de trafic (11,12) qui est associé à cet événement au sein de la règle extraite

## Description

L'invention concerne le domaine des communications entre terminaux au sein d'un réseau, et plus particulièrement celui du contrôle de l'échange de données entre ces terminaux.

En raison de l'évolution permanente des équipements constituant les réseaux, du nombre et de la variété des technologies mises en oeuvre par ces équipements, et du nombre et de la variété des services offerts aux clients qui utilisent les réseaux et leurs équipements, les opérateurs des réseaux sont de plus en plus souvent confrontés à des problèmes de gestion de priorités et de niveaux de service. Ce problème est encore renforcé lorsque l'opérateur d'un réseau passe avec ses clients des accords de niveau de service (ou SLA pour « Service Level Agreement ») comportant des spécifications techniques de niveau de service (ou SLS pour « Service Level Specification »).

Pour faciliter la tâche des opérateurs plusieurs types d'outils de gestion intégrée de réseau (ou OSS pour « Operation Support System ») ont été proposés. Parmi ces outils, on peut notamment citer les modules de gestion de la qualité de service qui délivrent des messages d'alarme en cas de détection d'un problème (ou évènement) survenu, ou susceptible de survenir, sur un équipement du réseau (comme par exemple les messages « TRAP » du protocole SNMP) ou sur une performance du réseau. Ces messages d'alarme sont généralement communiqués à un gestionnaire de réseau afin qu'il détermine les actions susceptibles de résoudre les problèmes qui en sont la cause. On peut également citer les modules d'ingénierie de trafic qui exécutent des commandes correspondant aux actions déterminées par les gestionnaires de réseau.

La solution décrite dans la demande de brevet WO00/74314 décrit un mécanisme de gestion de problèmes au sein d'un réseau, permettant de fournir une résolution de ce problème. Parmi les types de résolution cités (page 2), on trouve un rapport de problème, une notification de problème, de violation de SLA (*Service Level Agreement*), une reconfiguration du service impliqué dans le problème détecté etc. Par ailleurs, la solution se focalise sur les aspects « services » et ne prend pas en compte le comportement du réseau proprement dit (les flux transmis, la répartition de la charge sur les éléments de réseau etc.)

En aucune façon, donc, il est question d'interfacer ce mécanisme avec un module d'ingénierie de trafic.

De même, la demande de brevet WO 00/72183 se place au niveau de la gestion des services, et reste muette sur la problématique de la gestion du réseau proprement dit. Si ce document mentionne la possibilité d'un reconfiguration, celui-ci est déclenché à partir d'une violation d'un SLA, et non à partir d'alarmes provenant du réseau ou de l'état de celui-ci.

Aujourd'hui, il existe quelques outils permettant au gestionnaire d'un réseau de visualiser certaines alarmes, et par conséquent de l'assister dans sa gestion. Mais, il n'existe pas d'outil d'aide à la décision proposant des actions permettant d'agir sur des modules d'ingénierie de trafic. Le gestionnaire doit donc analyser tous les messages d'alarme délivrés par les différents modules de gestion de la qualité de service, généralement sous des formats différents, puis les classer par ordre de priorité, puis décider des actions à entreprendre, sur la base du trafic en cours, et enfin générer des commandes, généralement sous des formats différents, de sorte que les différents modules d'ingénierie de trafic puissent entreprendre lesdites actions.

Le gestionnaire doit donc être capable i) d'analyser de grandes quantités d'informations dans des intervalles de temps souvent courts, ii) d'interpréter tous les évènements délivrés par les différents modules de gestion, et iii) de configurer tous les modules d'ingénierie de trafic mis à sa disposition, et par conséquent de connaître toutes les commandes qu'ils utilisent. Ces opérations éloignent le gestionnaire de sa fonction principale qu'est la résolution de problèmes liés à des événements du réseau. De plus, ces opérations sont souvent fastidieuses et répétitives.

Par ailleurs, l'intégration d'un nouveau module d'ingénierie de trafic dans un groupe de composants OSS est une tâche complexe dans la mesure où, d'une part, les interfaces de langage de programmation (API) utilisées pour faire coexister les différents logiciels sont fréquemment incompatibles, et d'autre part, les évènements qui concernent un tel module proviennent généralement de nombreux outils logiciels hétérogènes de sorte qu'il faut prendre en compte toutes les modifications et prévisions de charge de trafic, et les contraintes associées aux équipements du réseau (par exemple une interface hors d'usage) ou aux modifications de capacité du réseau.

L'invention a donc pour but de remédier à tout ou partie des inconvénients précités.

Elle propose à cet effet un dispositif de contrôle de données de service, délivrées par des modules de gestion de la qualité de service d'un réseau de communications et destinées à permettre le pilotage de modules d'ingénierie de trafic.

Ce dispositif se caractérise par le fait qu'il comporte, d'une part, une mémoire (ou base de données) dans laquelle sont stockées des règles définies, chacune, à partir d'au moins une condition, représentative d'un évènement du réseau associé à l'un des modules d'ingénierie de trafic, et d'au moins une action, représentative d'au moins une commande devant être exécutée par le module d'ingénierie de trafic associé, et d'autre part, des moyens de contrôle capables, à réception de données de service désignant un évènement, d'extraire de la mémoire l'une au moins des règles correspondant à cet évènement, puis de délivrer chaque commande, représentative de l'action qui est associée à la condition représentative de l'événement, à destination du module d'ingénierie de trafic qui est associé à cet évènement au sein de la règle extraite.

L'opérateur pouvant désormais définir des règles qui reposent sur des actions indépendantes des implémentations des différents modules d'ingénierie de trafic de son réseau, son gestionnaire de réseau n'a donc plus besoin de connaître les commandes propres à chaque module d'ingénierie de trafic et/ou les formats spécifiques des différents types d'évènements délivrés par les différents modules de gestion de la qualité de service du réseau. Le gestionnaire peut donc se consacrer entièrement à la résolution des problèmes qui surviennent, ou qui sont susceptibles de survenir, dans le réseau.

Le fonctionnement du dispositif peut être intégralement automatisé (toutes les actions étant choisies et mises en oeuvre par les moyens de contrôle sans intervention du gestionnaire) ou bien seulement partiellement automatisé (certaines actions étant choisies et mises en oeuvre par les moyens de contrôle sans intervention du gestionnaire, et les autres actions étant choisies par les moyens de contrôle et mises en oeuvre après autorisation du gestionnaire). Dans le cas semi-automatisé, les règles sont préférentiellement associées, dans la mémoire, à un paramètre de validation à deux états, correspondant respectivement à des validations sans et avec autorisation du gestionnaire (ou de l'opérateur), et les moyens de contrôle comprennent avantageusement des moyens d'interface destinés, à réception d'une action à exécuter associée à une validation avec autorisation, à transmettre au serveur de l'opérateur l'action et une demande d'autorisation d'exécution de cette action, de sorte qu'à réception d'une telle autorisation, ou d'une interdiction, ils puissent autoriser, ou interdire, la délivrance au module d'ingénierie de trafic concerné des commandes associées à l'action envisagée.

Le dispositif selon l'invention pourra comporter de nombreuses caractéristiques complémentaires qui pourront être prises séparément et/ou en combinaison, et en particulier :
- des moyens de contrôle comprenant des premiers moyens de conversion agencés pour convertir les données de service, délivrées par les modules de gestion selon des formats différents, en évènements selon un format principal ;
- des moyens de contrôle comprenant des moyens de conversion agencés pour convertir chaque action, associée à une règle extraite, en commande(s) interprétable(s) par le module d'ingénierie de trafic associé à cette action. Dans ce cas, il est avantageux que les seconds moyens de conversion comportent des programmes de type « plug-in » pour assurer la conversion des actions en commandes ;
- des moyens de contrôle comprenant des moyens de configuration couplés à la mémoire, aux moyens d'interface et aux premiers et seconds moyens de conversion, et capables, à réception d'un évènement au format principal, d'extraire de la mémoire chaque règle associée à l'événement de manière à communiquer aux seconds moyens de conversion chaque action associée à chaque règle extraite, après une éventuelle demande d'autorisation via les moyens d'interface ;
- une mémoire (ou base de données) couplée au serveur de l'opérateur (ou du gestionnaire) du réseau, pour recevoir les règles (commandes/actions) ; cette mémoire pouvant être intégrée aux moyens de contrôle.

Un tel dispositif de contrôle peut être avantageusement intégré dans un outil de gestion intégrée de réseau (ou OSS).

L'invention porte également sur un procédé de contrôle de données de service, délivrées par des modules de gestion de la qualité de service d'un réseau de communications et destinées à permettre le pilotage de modules d'ingénierie de trafic.

Ce procédé consiste, d'une part, à prévoir des règles définies, chacune, à partir d'au moins une condition, représentative d'un évènement du réseau associé à l'un des modules d'ingénierie de trafic, et d'au moins une action, représentative d'au moins une commande devant être exécutée par ce module associé, et d'autre part, à réception de données de service désignant un événement, à sélectionner l'une au moins des règles correspondant à cet évènement, puis à délivrer chaque commande, représentative de l'action associée à la condition représentative de l'événement, au module d'ingénierie de trafic qui est associé à cet évènement au sein de la règle sélectionnée.

Le procédé selon l'invention pourra comporter de nombreuses caractéristiques complémentaires qui pourront être prises séparément et/ou en combinaison, et en particulier :
- on peut associer les règles (commandes/actions) à un paramètre de validation pouvant être placé dans un premier état, correspondant à une validation automatique sans autorisation d'un opérateur, ou un second état, correspondant à une validation après autorisation de l'opérateur. Dans ce cas, à réception d'une action à exécuter associée à un paramètre de validation placé dans son second état, on transmet à l'opérateur l'action et une demande d'autorisation d'exécution de cette action, et à réception d'une autorisation, ou d'une interdiction, on autorise, ou on interdit, la délivrance au module d'ingénierie de trafic concerné des commandes associées à l'action envisagée ;
- lorsque les données de service sont délivrées par les modules de gestion selon des formats différents, elles sont avantageusement converties en évènements selon un format principal, unique ;
- chaque action, associée à une règle extraite, est préférentiellement convertie en commande(s) interprétable(s) par le module d'ingénierie de trafic qui lui est associé.

L'invention peut être mise en oeuvre dans tout type de réseau de communications, privé ou public, et en particulier dans les réseaux Internet (IP), ATM et Frame Relay. Par ailleurs, l'invention peut permettre le contrôle de nombreux services, et en particulier IP VPN, le haut débit, les services « web », le multimédia et 3G.

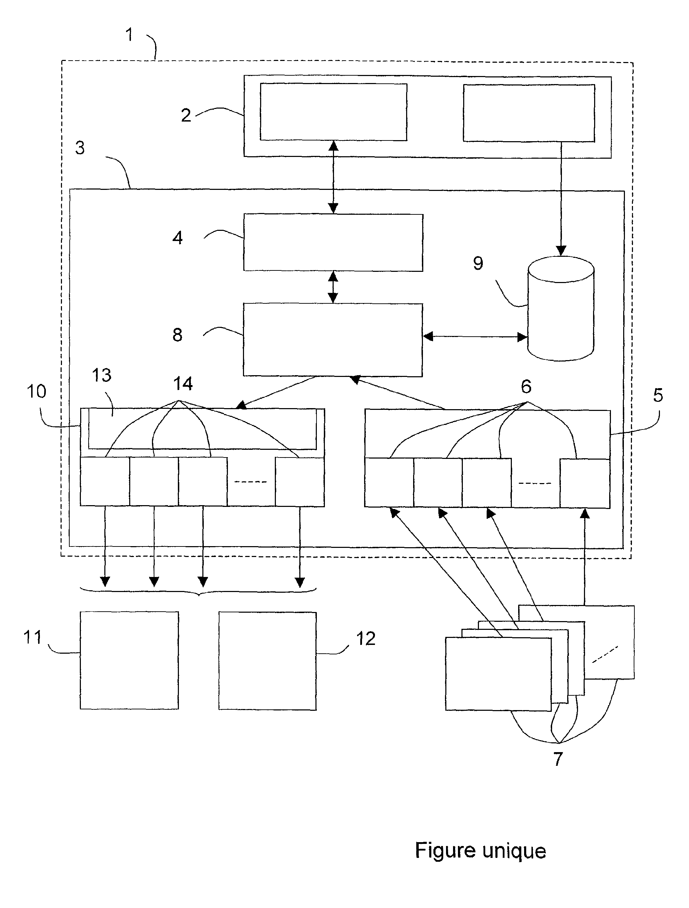

D'autres caractéristiques et avantages de l'invention apparaîtront à l'examen de la description détaillée ci-après, et de l'unique figure annexée qui illustre de façon schématique un exemple de réalisation d'un dispositif selon l'invention. Cette figure est, pour l'essentiel, de caractère certain. En conséquence, elle pourra non seulement servir à compléter l'invention, mais aussi contribuer à sa définition, le cas échéant.

Le dispositif selon l'invention est destiné à être installé au coeur d'un réseau de communications de manière à contrôler les données de service concernant les flux de données que s'échangent des terminaux de client raccordés audit réseau. A titre d'exemple non limitatif, on considère dans ce qui suit que le réseau est le réseau public Internet dans lequel les données sont échangées selon le protocole IP. Mais, il pourrait s'agir d'un réseau privé, de type Intranet, ou de plusieurs réseaux public(s) et/ou privé(s) raccordés les uns aux autres. Par ailleurs, on considère dans ce qui suit qu'une partie au moins des clients du réseau sont liés à l'opérateur par des accords de niveau de service (ou SLA) qui incluent des parties techniques définies par des spécifications de niveau de service (ou SLS).

Préférentiellement, le dispositif est implanté dans un serveur 1 contrôlé, via une interface graphique 2, par exemple de type GUI (pour « Graphic User Interface »), par un gestionnaire de réseau de l'opérateur. Plus préférentiellement encore, le dispositif de contrôle selon l'invention est intégré à un outil de gestion intégrée du réseau (ou OSS pour « Operation Support System »).

Dans l'exemple illustré, le dispositif comporte essentiellement un module de contrôle 3 raccordé notamment à l'interface graphique 2 du serveur 1 via une interface de validation 4, sur laquelle on reviendra plus loin.

Ce module de contrôle 3 comporte tout d'abord un premier module de conversion 5 comprenant plusieurs sous-modules 6 alimentés chacun par l'un des outils (ou modules) de gestion de la qualité de service du réseau 7.

Ces outils de gestion 7 délivrent par exemple des données représentatives des performances du réseau, ou d'une partie au moins de celui-ci, ainsi que des messages d'alarme signalant des problèmes au niveau d'équipements du réseau, ou d'une partie au moins d'entre eux. Certains de ces messages d'alarme sont représentatifs d'une violation de SLS (ou SLA) déjà survenue dans le réseau. Les données de performance sont par exemple les bandes passantes utilisées et les mesures de flux, et les messages d'alarme résultent par exemple d'informations émises par un routeur, suite à une erreur de routage, ou par une interface suite à un dysfonctionnement.

Certains outils de gestion 7 peuvent également suivre l'évolution des données de service pour délivrer des messages d'alarme dits « prédictifs » lorsque leur évolution est notamment susceptible d'aboutir à la violation d'une spécification de niveau de service, ci-après désignée par « violation de SLS », ou d'une façon plus générale à un problème potentiel dans le réseau. Cette analyse prédictive repose sur des algorithmes de prévision alimentés par les valeurs successives des différentes données de service reçues, dans un intervalle de temps choisi.

Tous ces différents outils de gestion de la qualité de service 7 étant parfaitement connus de l'homme de l'art, et ne faisant pas partie de l'invention, ils ne seront donc pas décrits ici.

Ces données de service définissent des évènements représentatifs de problème(s) en cours ou susceptibles de le devenir, et qui doivent, par conséquent être analysés le plus rapidement possible pour éviter toute aggravation de la situation. Elles sont généralement délivrées par les différents outils de gestion 7 selon des formats différents. En d'autres termes, ce sont des évènements hétérogènes qui parviennent au premier module de conversion 5.

Chaque sous-module 6 du module de conversion 5 est par conséquent chargé de convertir les évènements « hétérogènes » qui proviennent d'un outil de gestion 7, sous un format qui lui propre, en un évènement « homogène » sous un format dit principal.

Ces évènements homogènes sont communiqués à un module de configuration de trafic 8, du module de contrôle 3, également raccordé à une base de données 9, à l'interface de validation 4 et à un second module de conversion 10, lui-même couplé à différents outils d'ingénierie de trafic 11 et 12 que comprend le réseau.

Ces outils d'ingénierie de trafic, qui peuvent être centralisés (11) ou distribués dans des éléments du réseau (12), sont destinés à exécuter des commandes spécifiques définies par des actions susceptibles de résoudre les problèmes survenus ou d'éviter les problèmes potentiels prédits, lesquels ont fait l'objet d'une génération d'évènement par l'un des outils de gestion 7. Parmi ces commandes spécifiques on peut notamment citer la détermination d'un LSP ou l'optimisation globale des LSPs d'un réseau (l'acronyme anglais LSP signifie ici « Label Switch Path »).

Tous ces différents outils d'ingénierie de trafic 11 et 12 étant parfaitement connus de l'homme de l'art, et ne faisant pas partie de l'invention, ils ne seront donc pas décrits ici.

La base de données 9 stocke une multiplicité de règles définies, chacune, à partir d'au moins une condition et au moins une action. Plus précisément, chaque condition est représentative d'un évènement répertorié pouvant survenir dans le réseau (par exemple une surcharge de trafic, une prévision de surcharge de trafic sur une liaison, ou une alarme sur un équipement) et auquel correspond une action représentative de commandes spécifiques pouvant être exécutées par l'un des outils d'ingénierie de trafic 11 et 12.

Les conditions sont stockées dans la base de données 9 dans le format principal, c'est-à-dire de façon indépendante des formats des différents outils de gestion 7 qui les génèrent. Elles peuvent prendre en compte les spécifications techniques contenues dans des SLS. Par ailleurs, les actions sont stockées dans la base de données 9 dans un format principal, c'est-à-dire de façon indépendante des formats des différents outils d'ingénierie 11 et 12 qui doivent les exécuter. L'action n'est donc pas de type « propriétaire », comme une commande CLI (pour « Command Line Interface ») ou une requête SNMP. En d'autres termes, l'implémentation des actions est indépendante du format principal des règles. De la sorte, une même action sera, au final, implémentée différemment selon qu'elle est destinée à un type d'outil d'ingénierie de trafic ou à un autre type.

Préférentiellement, chaque règle est stockée dans la base de données 9 en correspondance de chaque condition et de chaque action associées. Plus précisément, une règle est généralement composée d'un ensemble de conditions et d'un ensemble d'actions, une même condition pouvant servir à plusieurs règles différentes, et une même action pouvant être exécutée à l'aide de conditions différentes.

Les règles peuvent donc se présenter sous l'une des formes suivantes :
- Règle 1 = « si Condition 1 vraie et Condition 2 vraie alors exécute Action 1 »
- Règle 2 = « si Condition 1 vraie et Condition 3 vraie alors exécute Action 2 »

Dans un premier exemple, une première condition peut être stockée dans la base de données 9 sous la forme : Condition 1 = « interface xy défectueuse ». A cette condition peut être associée l'action : Action 1 = « reconfigure les LSP zt sans utiliser l'interface xy défectueuse ». Et ces condition et action définissent par exemple la règle : Règle 1 = « si Condition 1 est vraie alors exécute Action 1 ».

Dans un second exemple, une seconde condition peut être stockée dans la base de données 9 sous la forme : Condition 2 = « la bande passante utilisée par l'interface z est supérieure à 50 Mbits ». A cette seconde condition peut être associée l'action : Action 2 = « optimise globalement le réseau ». Et ces condition et action définissent par exemple la règle : Règle 2 = « si Condition 2 est vraie alors exécute Action 2 ».

Préférentiellement, la base de données 9 est couplée à l'interface graphique 2 du serveur 1, de sorte que le gestionnaire du réseau puisse à tout moment intégrer une nouvelle règle, condition ou action, modifier une ancienne règle, condition ou action, ou supprimer une règle, condition ou action devenue inutile, de façon dynamique. Cette opération est en effet rendue particulièrement simple du fait du format utilisé pour définir les règles, conditions et actions.

Par ailleurs, les règles stockées dans la base de données 9 peuvent être associées à un paramètre de validation pouvant prendre deux états : un premier état correspondant à une validation automatique ne requérant pas d'autorisation du gestionnaire, et un second état correspondant à une validation requérant une autorisation préalable du gestionnaire.

Dans ce cas, lorsque le premier module de conversion 5 reçoit un évènement dans un format hétérogène, il le convertit au format principal homogène, puis le transmet au module de configuration 8. Celui-ci extrait alors de la base de données 9 la règle (ou les règles), la (ou les) condition(s) et la (ou les) action(s) qui correspondent à cet évènement, par exemple après avoir consulté une table de correspondance entre les différents évènements homogènes et la ou les conditions qui leurs correspondent dans la base de données. Puis, il détermine l'état du paramètre de validation associé aux éléments extraits de la base de données 9.

Si cet état est le premier, il transmet l'action, associée à la règle extraite, au second module de conversion 10, accompagnée des coordonnées désignant l'outil d'ingénierie 11 ou 12 devant l'exécuter.

En revanche, si cet état est le second, il transmet l'action, associée à la règle extraite, à l'interface de validation 4, accompagnée éventuellement des coordonnées désignant l'outil d'ingénierie 11 ou 12 devant exécuter cette action, de sorte qu'elle les communique à l'interface graphique 2 du serveur 1 accompagnées d'une demande de validation (ou d'autorisation). Si le gestionnaire n'est pas d'accord avec l'action choisie, il transmet un refus à l'interface de validation 4, via l'interface graphique 2, ce qui met fin au traitement par le dispositif. Le gestionnaire peut alors intervenir directement sur l'outil d'ingénierie de trafic après avoir lui-même déterminé les commandes à exécuter. En revanche, si le gestionnaire est d'accord avec l'action choisie, il transmet une autorisation à l'interface de validation 4, via l'interface graphique 2. L'interface de validation 4 transmet alors au module de configuration 8 l'autorisation, puis ledit module 8 transmet l'action, associée à la règle extraite, au second module de conversion 10, accompagnée des coordonnées désignant l'outil d'ingénierie 11 ou 12 devant l'exécuter.

Préférentiellement, l'état du paramètre de validation, associé à une règle choisie, peut être modifié par le gestionnaire du réseau via l'interface graphique 2.

Bien entendu, on peut se passer du paramètre de validation, les actions étant alors soit toutes validées automatiquement sans autorisation du gestionnaire, soit toutes validées après autorisation préalable du gestionnaire.

Les actions validées automatiquement ou par le gestionnaire, et qui parviennent au second module de conversion 10, font alors l'objet d'une conversion afin de pouvoir être interprétées et exécutées par l'outil d'ingénierie de trafic 11 ou 12 choisi.

A cet effet, le second module de conversion 10 comporte une interface 13 couplée à plusieurs sous-modules 14. Chaque sous-module 14 est couplé à l'un des outils d'ingénierie de trafic 11 ou 12, et est destiné à convertir l'action choisie et validée qu'il reçoit, en une ou plusieurs commandes et/ou requêtes au format particulier de son outil d'ingénierie de trafic. Il peut comprendre, par conséquent, une table de correspondance entre des actions spécifiques et des jeux de commandes, par exemple de type CLI, et/ou requêtes, par exemple de type SNMP, adaptées à l'outil d'ingénierie qui doit les exécuter. En variante, il peut comporter un ou plusieurs fichiers, de type plug-in, adaptés à la conversion d'action (d'autres modes de conversion d'actions peuvent être envisagés : CORBA, RMI, fichiers ASCII, protocole Q3, etc). Par ailleurs chaque sous-module 14 est agencé de manière à délivrer ses jeux de commandes et/ou requêtes selon la syntaxe propre à l'outil d'ingénierie de trafic 11 ou 12 auquel il est couplé.

L'interface 13 est destinée à aiguiller chaque action à exécuter vers le sous-module 14 couplé à l'outil d'ingénierie de trafic 11 ou 12 désigné par les coordonnées qu'il a reçu du module de configuration 8.

Les premier 5 et second 10 modules de conversion sont préférentiellement configurable de façon dynamique, de sorte qu'à tout moment le gestionnaire puisse leur ajouter, leur modifier, ou leur supprimer un ou plusieurs sous-module pour tenir compte de chaque évolution survenue dans le réseau au niveau des outils de gestion de la qualité de service 7 et des outils d'ingénierie de trafic 11 et 12.

Dans ce qui précède, on a décrit un dispositif essentiellement constitué d'un module de contrôle 3 intégrant la base de données 9. Cette configuration n'est qu'un exemple de réalisation. Le module de contrôle du dispositif selon l'invention peut en effet ne comporter que l'interface de validation et les modules de conversion et de configuration, ladite base de données étant alors indépendante du module de contrôle, bien que couplée à celui-ci.

Par ailleurs, les modules de conversion 5 et 10, de configuration 8 et l'interface de validation 4 du dispositif peuvent être respectivement réalisés sous la forme de circuits électroniques, de modules logiciels (ou informatiques), ou d'une combinaison de circuits et de logiciels.

L'invention offre également un procédé de contrôle de données de service, délivrées par des outils 7 de gestion de la qualité de service d'un réseau de communications et destinées à permettre le pilotage d'outils d'ingénierie de trafic 11 et 12.

Celui-ci peut être mis en oeuvre à l'aide du dispositif présenté ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé consiste, d'une part, à prévoir des règles qui sont chacune définie à partir d'au moins une condition, représentative d'un évènement du réseau associé à l'un des modules d'ingénierie de trafic 11 ou 12, et d'au moins une action, représentative d'au moins une commande devant être exécutée par ce module associé, et d'autre part, à réception de données de service désignant un évènement, à sélectionner l'une au moins des règles correspondant à cet évènement, puis à délivrer chaque commande, représentative de l'action associée à la condition représentative de l'événement, au module d'ingénierie de trafic 11 ou 12 qui est associé à cet évènement au sein de la règle sélectionnée.

Ce procédé, qui peut fonctionner en mode tout automatique ou semi-automatique, comporte avantageusement, lorsque les données de service sont délivrées par les modules de gestion 7 selon des formats hétérogènes, une phase de conversion des données de service en évènements selon un format principal (modèle d'information de service et de réseau), unique.

Il peut également comporter une phase de conversion des actions, associées à des règles extraites, en commande(s) et/ou requête(s) interprétable(s) par le module d'ingénierie de trafic 11 ou 12 qui lui est associé.

Grâce à l'invention, le gestionnaire du réseau n'a plus qu'à superviser un unique outil. Le gestionnaire n'ayant plus besoin de connaître les commandes et types de messages spécifiques aux différents outils d'ingénierie de trafic et de gestion de la qualité de trafic, il peut se consacrer à la supervision du trafic. Cette supervision peut même se limiter à la seule (re)configuration des modules de conversion et de la base de données, lorsque le fonctionnement est totalement automatisé.

Le traitement des évènements est par conséquent beaucoup plus rapide, ce qui profite tant à l'opérateur qu'à ses clients.

De plus, cela permet de réduire notablement le temps nécessaire à l'intégration de tout nouvel outil de gestion ou d'ingénierie de trafic dans le réseau.

En outre, l'invention permet d'ajouter à tout moment un nouveau logiciel ou un nouvel équipement, potentiellement générateur de nouveaux évènements, sans qu'il faille modifier les autres composants.

Enfin, l'invention s'applique à une grande variété de réseaux d'échange de données, et notamment les réseaux IP, ATM et Frame Relay, ainsi qu'à de nombreux types de services, et notamment IP VPN, le haut débit (par exemple l'accès ADSL), les services « web », le multimédia et 3G.

L'invention ne se limite pas aux modes de réalisation de procédés et dispositifs décrits ci-avant, seulement à titre d'exemple, mais elle englobe toutes les variantes que pourra envisager l'homme de l'art dans le cadre des revendications ci-après.

## Revendications

1. Dispositif de contrôle de données de service, délivrées par des modules de gestion (7) d'un réseau de communications et destinées à permettre le pilotage de modules d'ingénierie de trafic (11,12), **caractérisé en ce qu'**il comporte i) une mémoire (9) stockant des règles définies, chacune, à partir d'au moins une condition, représentative d'un évènement du réseau associé à l'un desdits modules d'ingénierie de trafic (11,12), et d'au moins une action, représentative d'au moins une commande devant être exécutée par ledit module associé, et ii) des moyens de contrôle (3) agencés, à réception de données de service désignant un évènement, pour extraire de ladite mémoire (9) l'une au moins des règles correspondant audit évènement et délivrer chaque commande, représentative de l'action associée à la condition représentative dudit évènement, à destination dudit module d'ingénierie de trafic (11,12), associé à cet évènement au sein de la règle extraite.

2. Dispositif selon la revendication 1, **caractérisé en ce que** lesdits moyens de contrôle (3) sont couplés à un serveur (1) dudit réseau.

3. Dispositif selon la revendication 2, **caractérisé en ce que** lesdites règles sont associées dans ladite mémoire (9) à un paramètre de validation propre à être placé dans un premier état, correspondant à une validation sans autorisation d'un opérateur contrôlant ledit serveur (1), ou un second état, correspondant à une validation après autorisation dudit opérateur.

4. Dispositif selon la revendication 3, **caractérisé en ce que** lesdits moyens de contrôle (3) comprennent des moyens d'interface (4) propres, à réception d'une action à exécuter, associée à un paramètre de validation placé dans un second état, à transmettre audit serveur (1) ladite action et une demande d'autorisation d'exécution, et, à réception d'une autorisation ou d'une interdiction délivrée par ledit serveur (1), à autoriser ou interdire la délivrance au module d'ingénierie de trafic concerné (11,12) de chaque commande associée à ladite action.

5. Dispositif selon l'une des revendications 1 à 4, **caractérisé en ce que** lesdits moyens de contrôle (3) comprennent des premiers moyens de conversion (5) agencés pour convertir lesdites données de service, délivrées par lesdits modules de gestion (7) selon des formats différents, en évènements selon un format principal.

6. Dispositif selon l'une des revendications 1 à 5, **caractérisé en ce que** lesdits moyens de contrôle (3) comprennent des seconds moyens de conversion (10) agencés pour convertir chaque action, associée à une règle extraite, en commande(s) interprétable(s) par le module d'ingénierie de trafic (11,12) associé à ladite action.

7. Dispositif selon la revendication 6, **caractérisé en ce que** lesdits seconds moyens de conversion (10) comportent des programmes de type « plug-in » propres à assurer la conversion des actions en commandes.

8. Dispositif selon la combinaison des revendications 4 à 6, **caractérisé en ce que** lesdits moyens de contrôle (3) comprennent des moyens de configuration (8) couplés à ladite mémoire (9), auxdits moyens d'interface (4) et auxdits premiers (5) et seconds (10) moyens de conversion, et agencés, à réception d'un évènement au format principal délivré par lesdits premiers moyens de conversion (5), pour extraire de la mémoire (9) chaque règle associée audit évènement, de manière à communiquer auxdits seconds moyens de conversion (10) chaque action associée à chaque règle extraite, après une éventuelle demande d'autorisation via lesdits moyens d'interface (4).

9. Dispositif selon l'une des revendications 1 à 8, **caractérisé en ce que** ladite mémoire (9) est couplée à un serveur (1) dudit réseau, de manière à pouvoir être alimentée en règles.

10. Dispositif selon l'une des revendications 1 à 9, **caractérisé en ce que** lesdits moyens de contrôle (3) comprennent ladite mémoire (9).

11. Dispositif de gestion intégrée d'un réseau, **caractérisé en ce qu'**il comporte un dispositif de contrôle selon l'une des revendications 1 à 10.

12. Procédé de contrôle de données de service, délivrées par des modules de gestion (7) d'un réseau de communications et destinées à permettre le pilotage de modules d'ingénierie de trafic (11,12), **caractérisé en ce qu'**il consiste i) à prévoir des règles définies, chacune, à partir d'au moins une condition, représentative d'un évènement du réseau associé à l'un desdits modules d'ingénierie de trafic (11,12), et d'au moins une action, représentative d'au moins une commande devant être exécutée par ledit module associé, et ii), à réception de données de service désignant un évènement, à sélectionner l'une au moins des règles correspondant audit évènement et à délivrer chaque commande, représentative de l'action associée à la condition représentative dudit évènement, audit module d'ingénierie de trafic (11,12) associé à cet évènement au sein de la règle sélectionnée.

13. Procédé selon la revendication 12, **caractérisé en ce que** lesdites règles sont associées à un paramètre de validation propre à être placé dans un premier état, correspondant à une validation sans autorisation d'un opérateur, ou un second état, correspondant à une validation après autorisation dudit opérateur.

14. Procédé selon la revendication 13, **caractérisé en ce qu'**à réception d'une action à exécuter associée à un paramètre de validation placé dans un second état, on transmet à l'opérateur ladite action et une demande d'autorisation d'exécution, et, à réception d'une autorisation ou d'une interdiction délivrée par ledit opérateur, on autorise ou interdit la délivrance au module d'ingénierie de trafic concerné de chaque commande associée à ladite action.

15. Procédé selon l'une des revendications 12 à 14, **caractérisé en ce que** lesdites données de service, délivrées par lesdits modules de gestion (7) selon des formats différents, sont converties en évènements selon un format principal.

16. Procédé selon l'une des revendications 12 à 15, **caractérisé en ce que** chaque action, associée à une règle extraite, est convertie en commande(s) interprétable(s) par le module d'ingénierie de trafic (11,12) qui lui est associé.

17. Utilisation des procédé et dispositifs selon l'une des revendications précédentes dans les réseaux choisis parmi les réseaux publics et privés.

18. Utilisation selon la revendication 17, **caractérisée en ce que** le réseau est choisi dans un groupe comprenant les réseaux Internet (IP), ATM et Frame Relay.

19. Utilisation selon l'une des revendications 17 et 18, pour le contrôle de services choisis dans un groupe comprenant au moins IP VPN, le haut débit, les services « web », le multimédia et 3G.
